# FASCICULE DE BREVET EUROPEEN

(11) **EP 2 694 401 B1**
(45) Date de publication et mention de la délivrance du brevet: **03.02.2016**
(21) Numéro de dépôt: 12718292.1
(22) Date de dépôt: 03.04.2012
(51) Int. Cl.: B65D 83/38, B65D 83/54, C08L 23/16, B65D 83/56

(54) **BAGUE POUR DISPOSITIF DE DISTRIBUTION DE PRODUIT FLUIDE**
RING FÜR EINE VORRICHTUNG ZUR AUSGABE EINES FLÜSSIGEN PRODUKTS
RING FOR A DEVICE FOR DISPENSING A FLUID PRODUCT

(30) Priorité: 06.04.2011 FR 1152988
(43) Date de publication de la demande: 12.02.2014
(73) Titulaire: Aptar France SAS, 27110 Le Neubourg (FR)
(72) Inventeur: JACUK, Christophe, F-27100 Le Vaudreuil (FR)
(74) Mandataire: CAPRI
(86) Numéro de dépôt international: PCT/FR2012/050720
(87) Numéro de publication internationale: WO 2012/136927

(56) Documents cités:
- EP-A1- 0 671 433
- EP-A1- 2 675 729
- WO-A1-2007/074274
- WO-A1-2007/107174
- DE-A1-102005 002 444
- FR-A1- 2 865 198
- US-A- 5 697 532
- US-A1- 2005 070 665
- US-A1- 2005 075 611

## Description

La présente invention concerne une bague pour valve de distribution de produit fluide et un dispositif de distribution de produit fluide comportant une telle bague.

Il est connu d'utiliser des bagues avec des valves de distribution aérosol, notamment des valves doseuses, montées sur un réservoir contenant le produit à distribuer. Ces bagues s'utilisent notamment dans les valves utilisables en position inversée, c'est-à-dire avec la valve disposée en-dessous du réservoir au moment de l'expulsion d'une dose de produit. Ces bagues remplissent généralement principalement deux fonctions, à savoir d'une part d'assurer la distribution d'une quantité maximale du produit contenu à l'intérieur du réservoir, en limitant le volume mort situé sous l'entrée de la valve lorsque celle-ci est en position inversée d'utilisation. D'autre part, les bagues servent aussi à limiter le contact du produit avec le joint de col disposé généralement entre le col du réservoir et la bague ou capsule de fixation, qui sert à fixer la valve sur le récipient. En limitant le contact entre le joint et le produit contenu dans le réservoir, on limite les risques de contamination du produit par les extractibles susceptibles d'être relargués par ledit joint, et on limite la détérioration du joint en raison de son contact avec le produit, notamment le gaz propulseur.

En général, la bague est assemblée sur le corps de valve par un serrage radial d'un bord interne de la bague sur ledit corps de valve. Cette mise en oeuvre présente l'inconvénient que lorsque ce serrage radial est trop fort, il peut au cours du temps induire une déformation du corps de valve, et notamment à l'intérieur dudit corps, ce qui peut entraîner un dysfonctionnement de la valve. En effet, de nombreuses valves prévoient un espace relativement étroit entre la soupape qui coulisse et le corps de valve. Des déformations radiales du corps de valve peuvent alors entraîner un frottement et même un blocage de ladite soupape. De même, pour remplir efficacement les deux fonctions susmentionnées, la bague est généralement en contact, pas nécessairement étanche, par sa partie externe avec une partie du col du réservoir. En particulier lorsque la capsule de fixation est une capsule sertissable, ce sertissage provoque une déformation radiale du col du réservoir, augmentant d'autant la compression radiale exercée sur la bague. A nouveau, cette augmentation de la compression radiale transmise au bord interne de la bague peut provoquer une augmentation des contraintes exercées sur le corps de valve et une déformation de celui-ci.

Le document WO 2007/074274 décrit une bague qui comporte une paroi déformable pour limiter les contraintes sur le corps de valve, et qui permet aussi de limiter les contacts du produit fluide avec le joint de col. Cette bague permet de résoudre en partie les problèmes susmentionnés. Les documents US 5 697 532, FR 2 865 198, et DE 10 2005 002444 décrivent d'autres dispositifs de l'art antérieur.

La présente invention a pour but de fournir une bague pour dispositif de distribution de produit fluide qui ne reproduit pas les inconvénients susmentionnés, et qui améliore la bague du document WO 2007/074274.

Plus particulièrement, la présente invention a pour but de fournir une bague pour dispositif de distribution d'aérosol qui évite toute contrainte radiale excessive sur le corps de valve, évitant ainsi tout risque de déformation excessive du corps de valve, en particulier lors du sertissage de la valve sur le réservoir.

La présente invention a également pour but de fournir une telle bague qui permette de compenser les tolérances de fabrication sans augmenter les contraintes radiales sur le corps de valve.

La présente invention a encore pour but de fournir une telle bague qui assure une vidange maximale du contenu du réservoir.

La présente invention a également pour but de fournir une telle bague qui limite le plus possible les interactions avec le produit et le gaz propulseur contenus dans le réservoir.

La présente invention a également pour but de fournir une dispositif de distribution de produit fluide qui soit simple et peu coûteux à fabriquer et à assembler, en diminuant notamment le nombre de pièces constitutives du dispositif de distribution de produit fluide.

La présente invention a donc pour objet une bague selon la revendication 1.

Avantageusement, ladite bague comporte une première partie radialement interne coopérant avec une partie du corps de valve et une seconde partie interne coopérant avec une autre partie du corps de valve.

Avantageusement, ladite première partie radialement interne comporte une lèvre déformable.

Avantageusement, la surface de contact de cette lèvre avec le corps de valve comporte une forme étagée.

Avantageusement, ladite lèvre comporte un évidement périphérique qui lui procure sa capacité à se déformer.

Avantageusement, ladite bague comporte une paroi axiale déformable s'étendant vers le fond du réservoir et apte à se déformer élastiquement radialement vers l'intérieur.

Avantageusement, la surface externe de la paroi axiale déformable est sensiblement lisse avant fixation de la capsule de fixation.

Avantageusement, ladite bague comporte une pluralité d'évidements axiaux s'étendant autour de la périphérie de la bague, radialement à l'intérieur de la bride radiale formant joint de col.

Avantageusement, lesdits évidements sont séparés par des nervures radiales.

Avantageusement, ladite bague comporte sous ladite bride radiale formant joint de col des profils saillants répartis autour de la périphérie extérieure de ladite bague, lesdits profils saillants étant séparés par des rainures.

La présente invention a aussi pour objet un dispositif de distribution de produit fluide comportant un réservoir, contenant du produit à distribuer et un gaz propulseur, notamment du type HFA, et une valve aérosol, et comportant une bague telle que décrite ci-dessus.

Avantageusement, ledit corps de valve comporte au moins une ouverture pour permettre le passage de produit du réservoir dans ladite valve, ladite première partie radialement interne étant située au niveau du bord inférieur de ladite ouverture, en position d'utilisation inversée, avec la valve disposée sous ledit réservoir.

Ces caractéristiques et avantages et d'autres de la présente invention apparaîtront plus clairement au cours de la description détaillée suivante de plusieurs formes de réalisation de celle-ci, faite en référence aux dessins joints, donnés à titre d'exemples non limitatifs, et sur lesquels :
- la figure 1 est une vue schématique en section transversale d'un dispositif de distribution d'aérosol comportant une bague selon un mode de réalisation avantageux de la présente invention, en position inversée d'utilisation ;
- la figure 2 est une vue schématique en perspective de la bague de la figure 1, vue de dessus ; et
- la figure 3 est une vue schématique en section transversale de la bague de la figure 1.

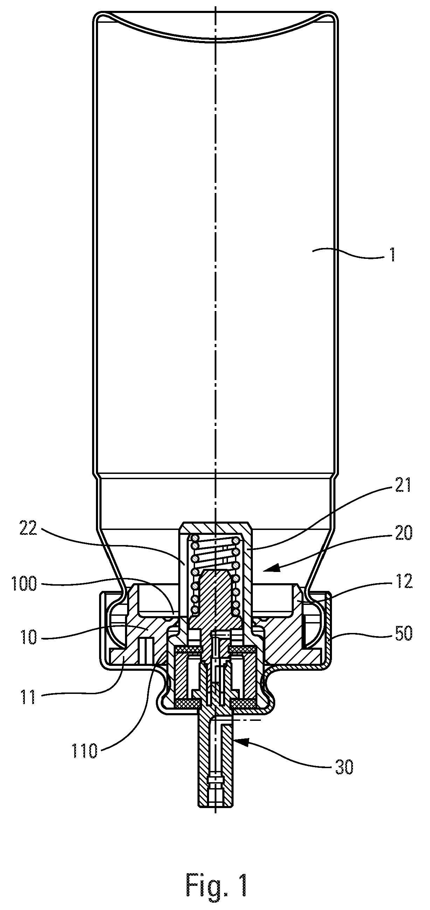

En référence plus particulièrement à la figure 1, le dispositif aérosol comporte un réservoir 1 contenant le produit à distribuer. Ce produit peut être du type pharmaceutique, et du gaz propulseur, tel qu'un gaz du type HFA, peut être prévu pour distribuer ce produit à travers une valve aérosol 20, de préférence une valve doseuse. Cette valve aérosol comporte un corps de valve 21 dans lequel coulisse une soupape 30. Le corps de valve 21 est assemblé sur le col du réservoir 1 au moyen d'une capsule de fixation 50, notamment du type sertissable, avec interposition d'un joint de col pour réaliser l'étanchéité. La valve est représentée sur la figure 1 dans sa position d'utilisation, qui est la position inversée, c'est-à-dire que lorsqu'une dose est expulsée, la valve est située en-dessous du réservoir. Le corps de valve 21 comporte une ou plusieurs ouverture(s) 22 permettant de remplir, notamment par gravité, la valve avec du produit à partir du réservoir. Ces ouvertures sont représentées sous la forme de fentes longitudinales latérales 22 s'étendant sur une partie de la hauteur du corps de valve 21. En variante, une ou plusieurs ouverture(s) de formes différentes pourraient être prévues à cet effet.

Selon l'invention, une bague 10 est assemblée autour du corps de valve 21. Cette bague 10 est destinée principalement à assurer la vidange la plus complète possible du réservoir, en limitant au maximum le volume mort situé en-dessous du bord inférieur de la ou des ouverture(s) 22 du corps de valve 21, lorsque la valve est en position d'utilisation inversée. Cette bague 10 comporte une bride radiale 11 qui forme le joint de col interposé entre le col du réservoir et la capsule de fixation 50. L'invention permet donc de supprimer une pièce, à savoir le joint de col, ce qui simplifie la fabrication et l'assemblage du dispositif.

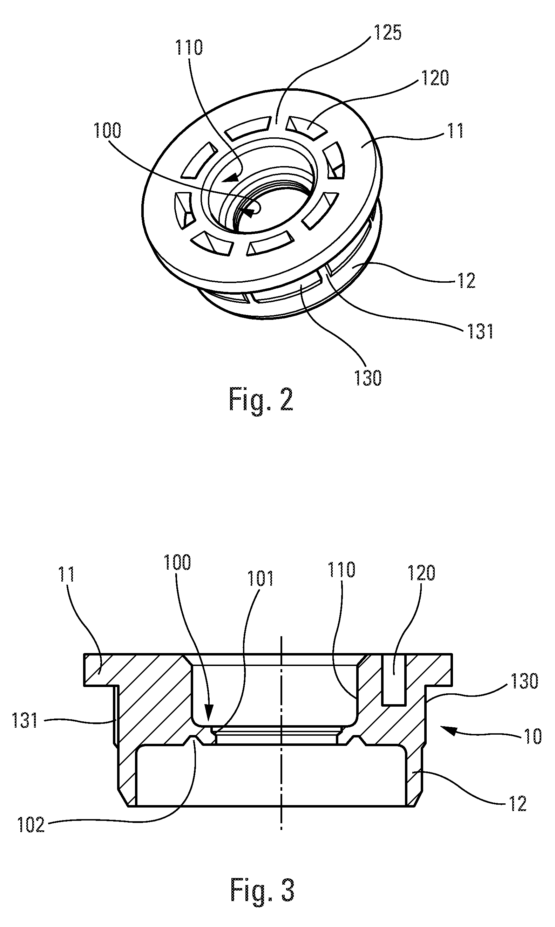

Un avantage de la bride radiale 11 formant joint de col est qu'après assemblage, la bague 10 ne peut pas glisser le long du corps de valve 21 puisque ladite bride radiale 11 est maintenue entre le col du réservoir et la capsule 50. Eventuellement, des bossages pourraient être formés sur la surface supérieure (dans la position de la figure 3) de la bride radiale 11 formant joint de col, pour améliorer l'étanchéité avec la capsule 50.

La bague 10 comporte au moins une première partie radialement interne 100 destinée à coopérer avec le corps de valve 21. De préférence, la première partie radialement interne 100 est la partie radialement la plus interne de la bague 10. Avantageusement, une seconde partie interne 110 peut être prévue pour coopérer avec une autre partie du corps de valve. Cette mise en oeuvre permet de répartir les contraintes radiales exercées par la bague 10 sur le corps de valve 21 en deux zones de contact au lieu d'une, ce qui d'une part limite les contraintes radiales exercées individuellement sur chacune desdites zones, et d'autre part permet d'éviter substantiellement tout glissement de la bague 10 sur le corps 21, celle-ci étant serrée sur celui-ci en deux endroits distincts.

La bague 10 comporte une paroi axiale déformable 12 apte à se déformer élastiquement radialement vers l'intérieur. Cette paroi déformable 12 a en particulier pour but de compenser et d'absorber les éventuelles contraintes radiales qui pourraient être exercées sur elle par le réservoir 1, notamment lorsqu'au moment du sertissage de la capsule de fixation 50, celui-ci se déforme radialement vers l'intérieur. La paroi déformable 12 est prévue sur une partie radialement extérieure de la bague et s'étend axialement vers le fond du réservoir. Cette mise en oeuvre facilite l'assemblage de la bague autour du corps de valve 21. Elle permet aussi de prévoir la bague avec des dimensions telles que la partie déformable n'est déformée que lors du sertissage de la capsule 50, mais ni lors de l'assemblage de la bague autour du corps de valve, ni lors de l'insertion de la valve dans le réservoir, ce qui pourrait provoquer un déplacement axial de la bague le long du corps de valve. De plus, cette forme spécifique avec la paroi déformable 12 disposée radialement à l'extérieur et pointant vers le fond du réservoir permet à celle-ci de participer au guidage du produit vers la ou les ouverture(s) 22 du corps de valve 21. Avantageusement, lors du sertissage, le contact entre le réservoir et la paroi déformable 12 est réalisé dans une zone de la paroi déformable apte à se déformer aisément. Dans l'exemple représenté sur la figure 1, cette zone est située vers l'extrémité axiale libre de ladite paroi déformable 12. Elle pourrait être décalée axialement, mais ne devrait de préférence pas se situer au tout début de cette paroi, où la capacité de déformation élastique serait faible voire nulle.

Un autre avantage d'une paroi déformable dirigée vers le fond du réservoir est que la partie joint de col 11 de la bague 10 est sollicitée axialement ou poussée contre la capsule après sertissage. En effet, la paroi 12 après déformation exerce une force dont une composante est axiale et dirigée vers la partie joint de col 11. Ceci a pour effet d'améliorer l'étanchéité de ce joint. Ceci améliore aussi la fixation de la bague 10 sur le corps de valve 21. Avec une paroi déformable qui serait dirigée dans l'autre sens, la bague serait au contraire sollicitée en éloignement dudit joint après déformation de la paroi.

Avantageusement, la surface externe de la partie de paroi axiale déformable 12 est lisse, de préférence polie-glace, c'est-à-dire avec un indice de rugosité inférieur à 1,0, avantageusement inférieur à 0,8, de préférence d'environ 0,05. Cette mise en oeuvre favorise un contact étanche entre le réservoir et la bague après sertissage.

Le fait que la bague 10 comporte une partie de paroi déformable 12 évite qu'une déformation du réservoir 1 ne soit automatiquement transmise au(x) bord(s) interne(s) 100 et 110 de celle-ci, et par conséquent au corps de valve 21. On évite ainsi tout risque de déformation du corps de valve 21, qui risquerait d'entraîner un blocage ou un dysfonctionnement de la valve.

Comme visible sur la figure 3, la première partie radialement interne 100 comporte une lèvre déformable qui peut avantageusement former un contact sensiblement étanche avec le corps de valve 21. Plus particulièrement, la surface de contact 101 de cette lèvre avec le corps de valve 21 peut comporter une forme étagée, et un évidement périphérique 102 procure à cette lèvre sa capacité à se déformer. Ainsi, sans exercer de fortes contraintes radiales sur le corps de valve, la première partie interne 100 de la bague 10 peut coopérer de manière sensiblement étanche avec ledit corps de valve 21.

Pour éviter les retassures après moulage, la bague 10 comporte avantageusement une pluralité d'évidements axiaux 120 s'étendant autour de la périphérie de la bague, radialement à l'intérieur de la bride radiale 11 formant joint de col. Ces évidements 120 sont avantageusement séparés par des nervures radiales 125, visibles sur la figure 2, qui fournissent la rigidité nécessaire à la bague.

Sous la bride radiale 11 formant joint de col, la bague 10 peut comporter plusieurs profils saillants 130 répartis autour de la périphérie extérieure et séparés par des rainures 131. Ces profils permettent d'améliorer l'assemblage de la valve dans le réservoir, en assurant un centrage lors de l'insertion dans le réservoir. Les rainures 131 peuvent servir à l'échappement d'air ou de gaz propulseur contenu à l'intérieur du réservoir au moment de l'assemblage de la valve sur le réservoir, par exemple dans le cas de dispositifs qui sont partiellement pré-remplis avant l'assemblage final de la valve.

La bague 10 forme donc une seule pièce monobloc qui doit réaliser l'étanchéité en tant que joint de col tout en étant au contact du produit contenu dans le réservoir. Le matériau utilisé pour réaliser la bague 10 doit donc présenter des propriétés lui permettant simultanément d'assurer une fonction d'étanchéité sans avoir d'interactions néfastes avec le produit et/ou le gaz propulseur contenu dans le réservoir.

Un matériau particulièrement adapté pour réaliser la bague selon l'invention est le COC élastomère. Avantageusement, le COC élastomère forme le seul matériau de base, mais on pourrait envisager de réaliser un alliage de COC élastomère avec un ou plusieurs autres matériaux, notamment ceux listés ci-après.

Le COC est un copolymère formulé avec un cycle norbornène et du polyéthylène. Le norbornène est issu de la synthèse d'éthylène et d'un cyclo-pentadiène. Le COC classique est un matériau substantiellement rigide. Le COC élastomère est alors un COC où la part de polyéthylène est plus importante, ce qui confère des propriétés élastomériques audit matériau. Le COC élastomère n'est donc pas un mélange ou un alliage de COC classique avec un matériau élastomère, mais un matériau en tant que tel, qui présentent certaines propriétés similaires aux élastomères.

Le COC élastomère est un matériau ayant une température de transition vitreuse comprise entre - 10°C et 15 °C, une température de fusion cristalline comprise entre 50°C et 120°C, une cristallinité en poids comprise entre 5% et 40% et une teneur en norbornène comprise entre 2 et 15 mol%.

Les avantages du COC élastomère sont nombreux.

D'une part, il présente une nature chimique très neutre car, contrairement aux autres matériaux élastomères, il ne comporte pas de double liaison ouverte ou disponible susceptible de réagir.

Le COC élastomère a également un niveau d'extractibles très bas, c'est-à-dire que très peu de particules appelées extractibles sortent de joints réalisés en COC élastomère, même lorsqu'ils sont en contact avec des gaz propulseurs du type HFA, qui sont particulièrement agressifs. En particulier, le COC élastomère ne présente pas d'acides gras en tant qu'extractibles, contrairement aux thermoplastiques élastomères et aux élastomères. Les extractibles existants avec le COC élastomère comportent donc principalement des antioxydants.

Le tableau ci-dessous démontre que le niveau d'extractibles est nettement inférieur pour le COC-E par rapport au TPE (thermoplastique élastomère), qui dans cet exemple comparatif, est formé d'un mélange de 50% de butyle et de 50% de polyéthylène :

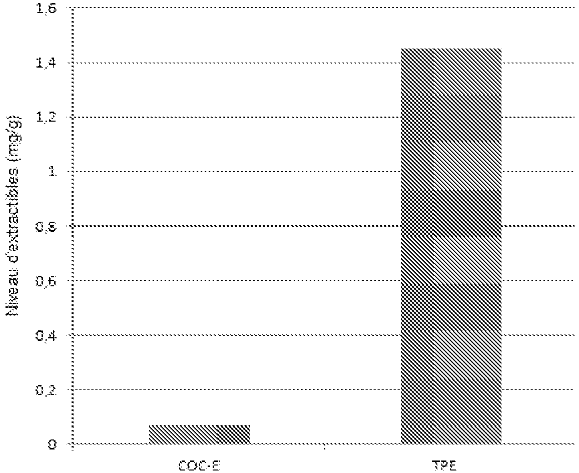

Les matériaux élastomères présentent pour leur part des niveaux d'extractibles encore nettement supérieurs, comme par exemple le nitrile qui a un niveau d'extractibles d'environ 14 mg/g ou l'EPDM qui a un niveau d'extractibles compris entre 1,4 et 5,3 mg/g.

Le COC élastomère présente également des propriétés barrière à la vapeur d'eau élevées, ainsi que des propriétés mécaniques qui sont tout à fait adaptées pour réaliser des joints de valve, notamment la dureté et le module de Young. Il présente également une bonne résistance à l'abrasion. Le COC élastomère présente également une bonne compatibilité avec les produits actifs de type pharmaceutique, car il n'y a pas de relarguage d'ions, pas de trace métallique, il comporte des surfaces hydrophobes, de sorte qu'il y a moins d'absorption, et enfin il est de conception aisée, c'est-à-dire qu'il est facile de réaliser des pièces de forme quelconque à partir de ce matériau.

Par exemple et de manière non limitative, le produit COC-E X1 T6, commercialisé par la société TOPAS ADVANCED POLYMERS est un matériau adapté pour la présente invention.

D'autres matériaux sont aussi envisageables en alliage avec le COC élastomère, par exemple les élastomères thermoplastiques polyuréthane (TPU). En variante, on peut utiliser un matériau thermoplastique élastomère (TPE) à base oléfinique, par exemple en PP/SBC (mélange de polypropylène et de copolymère à blocs styrène), POE (éthylène octène), PEB (éthylène butène), EVA (éthylène vinyle acétate), PP/EPDM (mélange de polypropylène et d'éthylène propylène diène monomère). D'autres matériaux possibles comprennent : polyoléfine, polybutylène téréphtalate (PBT), polyoxyméthylène (POM), polyamide (PA), polycarbonate (PC), polyméthacrylate de méthyle (PMMA), polychlorure de vinyle (PVC), acrylonitrile butadiène styrène (ABS), polypropylène (PP), polyéthylène (PE), et des alliages de tous ces matériaux. D'autres matériaux possibles comprennent les alliages thermoplastiques (NBR/PP, butyl/PP, halobutyl/PP, HNBR/PE), les élastomères thermoplastiques préparés par vulcanisation dynamique, les élastomères thermoplastiques polyamide (PEBA, PEA, PEEA, PCEA), les élastomères thermoplastiques polyéther ester, les copolymères à blocs styrène (SBS, SIS, SEBS, SEPS, SEEPS, SIBS), et des mélanges de ces matériaux.

Bien que la présente invention ait été décrite en référence à un mode de réalisation de celle-ci représenté sur les dessins, il est entendu qu'elle n'est pas limitée à cette variante, mais qu'au contraire un homme du métier peut y apporter toutes modifications utiles sans sortir du cadre de ka présente invention tel que défini par les revendications annexées.

En particulier, la structure de la valve peut être quelconque. De même, la forme du corps de valve et des ouvertures peut être différente de celle représentée. Il en est de même du réservoir, et notamment de son col, ainsi que de la capsule ou bague de fixation qui peut être réalisée différemment, par exemple encliquetable ou vissable. De manière générale, toute modification est possible sans sortir du cadre de la présente invention tel que défini par les revendications annexées.

## Revendications

1. Bague (10) destinée à être disposée autour d'un corps de valve (21) d'une valve de distribution de produit fluide (20) montée, au moyen d'une capsule de fixation (50), tel qu'une capsule sertissable, sur un réservoir (1) contenant du produit à distribuer, ladite bague (10) étant réalisée d'une seule pièce monobloc comportant au moins une partie interne (100, 110) coopérant avec ledit corps de valve (21), et une bride radiale (11) formant joint de col qui s'étend entre le col du réservoir (1) et la capsule de fixation (50), **caractérisée en ce que** ladite pièce monobloc formant ladite bague (10) est réalisée en un matériau comportant du COC élastomère.

2. Bague selon la revendication 1, comportant une première partie radialement interne (100) coopérant avec une partie du corps de valve (21) et une seconde partie interne (110) coopérant avec une autre partie du corps de valve (21).

3. Bague selon la revendication 2, dans laquelle ladite première partie radialement interne (100) comporte une lèvre déformable.

4. Bague selon la revendication 3, dans laquelle la surface de contact (101) de cette lèvre avec le corps de valve (21) comporte une forme étagée.

5. Bague selon la revendication 3 ou 4, dans laquelle ladite lèvre comporte un évidement périphérique (102) qui lui procure sa capacité à se déformer.

6. Bague selon l'une quelconque des revendications précédentes, comportant une paroi axiale déformable (12) s'étendant vers le fond du réservoir et apte à se déformer élastiquement radialement vers l'intérieur.

7. Bague selon la revendication 6, dans laquelle la surface externe de la paroi axiale déformable (12) est sensiblement lisse avant fixation de la capsule de fixation (50).

8. Bague l'une quelconque des revendications précédentes, comportant une pluralité d'évidements axiaux (120) s'étendant autour de la périphérie de la bague, radialement à l'intérieur de la bride radiale (11) formant joint de col.

9. Bague selon la revendication 8, dans laquelle lesdits évidements (120) sont séparés par des nervures radiales (125).

10. Bague selon l'une quelconque des revendications précédentes, comportant sous ladite bride radiale (11) formant joint de col des profils saillants (130) répartis autour de la périphérie extérieure de ladite bague, lesdits profils saillants (130) étant séparés par des rainures (131).

11. Bague selon l'une quelconque des revendications précédentes, dans laquelle ladite bague (10) est constituée de COC élastomère.

12. Bague selon l'une quelconque des revendications précédentes, dans laquelle le COC élastomère est un copolymère élastomère ayant une température de transition vitreuse comprise entre - 10°C et 15 °C, une température de fusion cristalline comprise entre 50°C et 120°C, une cristallinité en poids comprise entre 5% et 40% et une teneur en norbornène comprise entre 2 et 15 mol%.

13. Dispositif de distribution de produit fluide comportant un réservoir (1), contenant du produit à distribuer et un gaz propulseur, notamment du type HFA, et une valve aérosol (20), **caractérisé en ce qu'**il comporte une bague (10) selon l'une quelconque des revendications précédentes.

14. Dispositif selon la revendication 13, dans lequel ledit corps de valve (21) comporte au moins une ouverture (22) pour permettre le passage de produit du réservoir (1) dans ladite valve (20), ladite première partie radialement interne (100) étant située au niveau du bord inférieur de ladite ouverture (22), en position d'utilisation inversée, avec la valve (20) disposée sous ledit réservoir (1).

## Patentansprüche

1. Ring (10) zur Anordnung um ein Ventilgehäuse (21) eines Ausgabeventils für ein fluides Produkt (20), der mittels einer Befestigungskapsel (50), wie einer aufquetschbaren Kapsel, auf einem Behälter (1), der auszugebendes Produkt enthält, montiert ist, wobei der Ring (10) aus einem einzigen einstückigen Teil gebildet ist, das mindestens einen inneren Teil (100, 110), der mit dem Ventilgehäuse (21) zusammenwirkt, und einen eine Kragendichtung bildenden radialen Flansch (11) umfasst, der sich zwischen dem Behälterkragen (1) und der Befestigungskapsel (50) erstreckt, **dadurch gekennzeichnet, dass** das den Ring (10) bildende einstückige Teil aus einem Material gefertigt ist, das COC-Elastomer enthält.

2. Ring nach Anspruch 1, umfassend einen ersten radial inneren Teil (100), der mit einem Teil des Ventilgehäuses (21) zusammenwirkt, und einen zweiten inneren Teil (110), der mit einem anderen Teil des Ventilgehäuses (21) zusammenwirkt.

3. Ring nach Anspruch 2, wobei der erste radial innere Teil (100) eine verformbare Lippe umfasst.

4. Ring nach Anspruch 3, wobei die Kontaktfläche (101) dieser Lippe mit dem Ventilgehäuse (21) eine abgestufte Form aufweist.

5. Ring nach Anspruch 3 oder 4, wobei die Lippe eine Umfangsvertiefung (102) umfasst, die ihr die Fähigkeit zur Verformung verleiht.

6. Ring nach einem der vorhergehenden Ansprüche, umfassend eine verformbare axiale Wand (12), die sich zum Boden des Behälters erstreckt und dazu geeignet ist, sich elastisch radial nach innen zu verformen.

7. Ring nach Anspruch 6, wobei die Außenfläche der verformbaren axialen Wand (12) vor Befestigung der Befestigungskapsel (50) im Wesentlichen glatt ist.

8. Ring nach einem der vorhergehenden Ansprüche, umfassend eine Vielzahl von axialen Vertiefungen (120), die sich um den Umfang des Rings von dem die Kragendichtung bildenden radialen Flansch (11) radial nach innen erstrecken.

9. Ring nach Anspruch 8, wobei die Vertiefungen (120) durch radiale Rippen (125) getronnt sind.

10. Ring nach einem der vorhergehenden Ansprüche, umfassend unter dem eine Kragendichtung bildenden radialen Flansch (11) vorstehende Profile (130), die um den Außenumfang des Rings verteilt sind, wobei die vorstehenden Profile (130) durch Nuten (131) getrennt sind.

11. Ring nach einem der vorhergehenden Ansprüche, wobei der Ring (10) aus COC-Elastomer gebildet ist.

12. Ring nach einem der vorhergehenden Ansprüche, wobei das COC-Elastomer ein elastomeres Copolymer mit einer Glasübergangstemperatur zwischen -10 °C und 15 °C, einer kristallinen Schmelztemperatur zwischen 50 °C und 120 °C, einem Kristallinitätsgewicht zwischen 5 % und 40 % und einem Norbornengehalt zwischen 2 und 15 Mol-% ist.

13. Ausgabevorrichtung für ein fluides Produkt, umfassend einen Behälter (1), der auszugebendes Produkt und ein Treibgas, insbesondere vom HFA-Typ, enthält, und ein Aerosolventil (20), **dadurch gekennzeichnet, dass** sie einen Ring (10) nach einem der vorhergehenden Ansprüche umfasst.

14. Vorrichtung nach Anspruch 13, wobei das Ventilgehäuse (21) mindestens eine Öffnung (22) umfasst, um den Durchgang des Produkts aus dem Behälter (1) in das Ventil (20) zu erlauben, wobei sich der erste radial innere Teil (100) in umgedrehter Gebrauchsposition auf Höhe des unteren Rands der Öffnung (22) befindet, wenn das Ventil (20) auf dem Behälter (1) angeordnet ist.

## Claims

1. A ring (10) for arranging around a valve body (21) of a fluid dispenser valve (20) that is mounted by means of a fastener capsule (50), such as a crimpable capsule, on a reservoir (1) containing fluid to be dispensed, said ring (10) being made as a single piece including at least one inner portion (100, 110) that co-operates with said valve body (21), and a radial flange (11) that forms a neck gasket that extends between the neck of the reservoir (1) and the fastener capsule (50),**characterized in that** said single piece forming said ring (10) is made of a material that includes COC elastomer.

2. A ring according to claim 1, including a first radially-inner portion (100) that co-operates with a portion of the valve body (21), and a second inner portion (110) that co-operates with another portion of the valve body (21).

3. A ring according to claim 2, wherein said first radially-inner portion (100) has a deformable lip.

4. A ring according to claim 3, wherein the contact surface (101) of the lip with the valve body (21) has a shape that is stepped.

5. A ring according to claim 3 or claim 4, wherein said lip includes a peripheral recess (102) that gives it its capacity to deform.

6. A ring according to any preceding claim, including a deformable axial wall (12) that extends towards the bottom of the reservoir, and that is capable of deforming elastically in a radially-inward direction.

7. A ring according to claim 6, wherein the outer surface of the deformable axial wall (12) is substantially smooth before fastening the fastener capsule (50).

8. A ring according to any preceding claim, including a plurality of axial recesses (120) that extend around the periphery of the ring, radially inwards from the neck-gasket-forming radial flange (11).

9. A ring according to claim 8, wherein said recesses (120) are separated by radial ribs (125).

10. A ring according to any preceding claim, including, below said neck-gasket-forming radial flange (11), projecting profiles (130) that are distributed around the outer periphery of said ring, said projecting profiles (130) being separated by grooves (131).

11. A ring according to any preceding claim, wherein said ring (10) is constituted by COC elastomer.

12. A ring according to any preceding claim, wherein COC elastomer is a copolymer elastomer having a glass transition temperature lying in the range -10°C to 15°C, a crystalline melting point lying in the range 50°C to 120°C, a crystallinity by weight lying in the range 5% to 40%, and a norbornene content lying in the range 2 mol% to 15 mol%.

13. A fluid dispenser device comprising a reservoir (1) containing fluid to be dispensed and a propellant gas, in particular of the HFA type, and an aerosol valve (20), the device being **characterized in that** it includes a ring (10) according to any preceding claim.

14. A device according to claim 13, wherein said valve body (21) includes at least one opening (22) so as to enable fluid to pass from the reservoir (1) into said valve (20), said first radially-inner portion (100) being situated at the bottom edge of said opening (22), in the upsidedown working position, with the valve (20) arranged below said reservoir (1).
